# EUROPÄISCHE PATENTANMELDUNG

(11) **EP 1 990 146 A2**
(43) Veröffentlichungstag der Anmeldung: **12.11.2008**
(21) Anmeldenummer: 08008495.7
(22) Anmeldetag: 06.05.2008
(51) Int. Cl.: B27B 5/32

(54) **Vorrichtung zum Befestigen eines Rotationswerkzeuges**

(30) Priorität: 09.05.2007 AT 7102007
(71) Anmelder: Felder KG, 6060 Hall in Tirol (AT)
(72) Erfinder: Felder, Johann, 6060 Hall in Tirol (AT)
(74) Vertreter: Hofinger, Stephan

(57) **Zusammenfassung**

Vorrichtung (1) zum Befestigen eines Rotationswerkzeuges (2), insbesondere Kreissägeblatt, Fräser oder dergleichen, an einer Welle (3) einer Werkstoffbearbeitungsmaschine, insbesondere Holzbearbeitungsmaschine, mit einem Anlageefernent (4) und einer Spanneinrichtung (5), die jeweils eine Anlagefläche (18, 18'), zwischen denen das Rotationswerkzeug (2) klemmbar ist, aufweisen, wobei die Spanneinrichtung (5) eine die Anlagefläche (18) aufweisende Spannscheibe (6), ein die Spannscheibe (6) durchsetzendes, mit der Welle (3) verbindbares, insbesondere axial verschraubbares Spannelement (7), wenigstens ein Kraftübertragungselement (8) zum Verbinden des Spannelementes (7) mit der Welle (3) und einen zwischen dem Kraftübertragungselement (8) und dem Spannelement (7) wirkenden Kraftuntersetzungsmachanismus (9) aufweist, dadurch gekennzeichnet, dass der zwischen dem. Kraftübertragungselement (8) und dem Spannelement (7) wirkende Kraftuntersetzungsmechanismus (9) ein hydraulisches Getriebe aufweist.

## Beschreibung

Die Erfindung betrifft eine Vorrichtung zum Befestigen eines Rotationswerkzeuges, insbesondere Kreissägeblatt, Fräser oder dergleichen, an einer Welle einer Werkstoffbearbeitungsmaschine, insbesondere Holzbearbeüungsmaschine, mit einem Anlageelement und einer Spanneinrichtung, die jeweils eine Anlagefläche, zwischen denen das Rotationswerkzeug klemmbar ist, aufweisen, wobei die Spanneinrichtung eine die Anlagefläche aufweisende Spannscheibe, ein die Spannscheibe durchsetzendes, mit der Welle verbindbares, insbesondere axial verschraubbares Spannelement und wenigstens ein Kraftübertragungselement zum Verbinden des Spannelementes mit der Welle aufweist.

Bei den bekannten derartigen Vorrichtungen wird das Kraftübertragungselement zum Verbinden des Spannelementes mit der Welle der Werkstoffbearbeitungsmaschine in der Regel von einem am freien Ende des Spannelementes ausgebildeten Außensechskant oder Innensechskant gebildet und erfolgt das Verbinden des Spannelementes durch Einschrauben desselben in die Welle mittels eines entsprechenden Werkzeuges, beispielsweise einem Maulschlüssel oder einem Innensechskantschlüssel.

Wenngleich die bekannten Vorrichtungen durchaus geeignet sind, eine sichere Befestigung des Rotationswerkzeuges an der Welle zu gewährleisten, ist, bedingt durch die Ausbildung des Kraftübertragungselementes, das Vorhandensein eines entsprechenden Werkzeuges bei einem Wechsel des Rotationswerkzeuges zwingend erforderlich. Nun kommt es in der Praxis aber häufig vor und ist es aus sicherheitstechnischen Gründen auch ratsam, dass das Wartungswerkzeug für die Werkstoffbearbeitungsmaschine an einem von der Werkzeugmaschine entfernten Ort aufbewahrt wird, sodass bei einem Wechsel des Rotationswerkzeuges zuerst das entsprechende Werkzeug zum Lösen des Spannelementes vom Aufbewahrungsort geholt werden muss. Weiters ist es schon vorgekommen, dass nach einem Wechsel des Rotationswerkzeuges das Betätigungswerkzeug für das Kraftübertragungselement am Kraftübertragungselement belassen bzw. dort vergessen wurde, was bei Inbetriebnahme der Werkstoffbearbeitungsmaschine dazu führte, dass das Betätigungswerkzeug für das Kraftübertragungselement aufgrund der auftretenden Fliehkräfte durch den Arbeitsraum geschleudert wurde, was selbstredend eine große Gefahrenquelle für die anwesenden Arbeiter darstellt.

Ausgehend von diesem Stand der Technik hat es sich die Erfindung zur Aufgabe gemacht, eine Vorrichtung der eingangs genannten Art dahingehend zu verbessern, dass ein schneller und einfacher Tausch des Rotationswerkzeuges unter Vermeidung der vorbeschriebenen Nachteile sicher und einfach gewährleistet werden kann.

Diese Aufgabe wird erfindungsgemäß gelöst, indem die Spanneinrichtung einen zwischen dem Kraftübertragungselement und dem Spannelement wirkenden Kraftuntersetzungsmechanismus aufweist, wobei gemäß einem weiteren Ausführungsbeispiel der Erfindung das Kraftübertragungselement Teil des Kraftuntersetzungsmechanismus sein kann.

Durch die Integration eines Kraftuntersetzungsmechanismus in die Spanneinrichtung ist es möglich, eine sehr hohe Spannkraft für das Spannelement zu erzeugen, sodass auf die Verwendung eines Werkzeuges zum Betätigen des Kraftübertragungselementes verzichtet werden kann. Zu diesem Zweck hat es sich als vorteilhaft herausgestellt, wenn das Kraftübertragungseiement zur werkzeuglosen manuellen Betätigung durch einen Benutzer angeordnet und ausgebildet ist, wobei ein bevorzugtes Ausführungsbeispiel der Erfindung vorsieht, dass das Kraftübertragungselement von einer Drehscheibe oder einem Drehring gebildet ist.

Um einen festen Sitz des Rotationswerkzeuges auf der Welle sicherzustellen und die hierfür notwendige Spannkraft auf die Spannscheibe in einfacher Weise aufbringen zu können, sieht ein weiteres Ausführungsbeispiel der Erfindung vor, dass der Kraftuntersetzungsmechanismus ein Untersetzungsverhältnis größer 1:10, vorzugsweise größer 1:25 aufweist, wobei es sich insbesondere für eine manuelle Betätigung des Kraftübertragungselementes als vorteilhaft herausgestellt hat, wenn das Untersetzungsverhältnis Ober 1:35, vorzugsweise bei etwa 1:50, liegt.

Gemäß einer ersten Ausführungsvariante ist vorgesehen, dass der Kraftuntersetzungsmechanismus ein mechanisches Untersetzungsgetriebe aufweist. Dabei wird eine kompakte Ausgestaltung bei gleichzeitiger Vermeidung einer Spielzunahme in der Verzahnung des Untersetzungsgetriebes dann erreicht, wenn gemäß einem weiteren Ausführungsbeispiel der Erfindung das Untersetzungsgetriebe einstufig ausgebildet ist.

Eine kompakte und leichte Bauweise gepaart mit einem hohen Untersetzungsverhältnis wird dann erreicht, wenn gemäß einem weiteren Ausführungsbeispiel, das Untersetzungsgetriebe ein vorzugsweise ellipsenförmiges Antriebselement, zumindest einen eine Außenverzahnung aufweisenden Zahnkranz und ein Abtriebselement umfasst, wobei die Außenverzahnung des Zahnrades mit dem Abtriebselement kämmt.

Ein alternatives Ausführungsbeispiel der Erfindung sieht vor, dass das Untersetzungsgetriebe von einem Planetengetriebe gebildet ist, wobei es zur Erreichung eines entsprechenden großen Untersetzungsverhältnisses vorteilhaft sein kann, wenn das Planetengetriebe zweistufig ausgebildet ist.

Gemäß einem bevorzugten Ausführungsbeispiel der Erfindung ist weiters vorgesehen, dass das Untersetzungsgetriebe von einem Harmonic-Drive-Getriebe gebildet ist, das - wie an sich bekannt - eine hohe Untersetzung mit nur einer Getriebestufe aufweist.

Eine weitere Ausführungsvariante der Erfindung sieht vor, dass der Kraftuntersetzungsmechanismus ein hydraulisches Getriebe aufweist. Gemäß einer konstruktiv einfachen Lösung ist dabei vorgesehen, dass das hydraulische Getriebe mehrere, vorzugsweise zwei, über wenigstens eine Leitung in Verbindung stehende Kammern mit verschieden großen Querschnittsflächen aufweist, wobei die Kammern jeweils von einem axial bewegbaren Kolben begrenzt sind.

Im Sinne einer kompakten und in Betrieb robusten Bauweise kann dabei gemäß einem weiteren Ausführungsbeispiel der Erfindung vorgesehen sein, dass der Kolben der Kammer mit der kleineren Querschnittsfläche vom Kraftübertragungselement und der Kolben der Kammer mit der größeren Querschnittsfläche von der Spannscheibe gebildet ist.

In bevorzugter Weise ist dabei gemäß einer weiteren Ausführungsform der Erfindung vorgesehen, dass die Spanneinrichtung eine hydraulische Presse umfasst.

Weitere Einzelheiten und Vorteile der Erfindung werden anhand der nachfolgenden Figurenbeschreibung unter Bezugnahme auf die in der Zeichnung dargestellten Ausführungsbeispiele näher erläutert. Dabei zeigt:
- Fig. 1: eine Prinzipskizze der erfindungsgemäßen Vorrichtung,
- Fig. 2: einen Querschnitt durch ein erstes Ausführungsbeispiel einer erfindungsgemäßen Vorrichtung unter Verwendung eines Harmonic-Drive-Getriebes,
- Fig. 3: eine perspektivische Ansicht des Ausführungsbeispieles gemäß Fig. 2,
- Fig. 4: einen Querschnitt durch ein zweites Ausführungsbeispiel der Erfindung mit einem hydraulischen Getriebe,
- Fig. 5a u. 5b: die Spanneinrichtung des Ausführungsbeispieles gemäß Fig. 4 in gelöstem und gespanntem Zustand und
- Fig. 6: ein weiteres Ausführungsbeispiel einer Spanneinrichtung mit einer hydraulischen Presse in einer Explosionsdarstellung

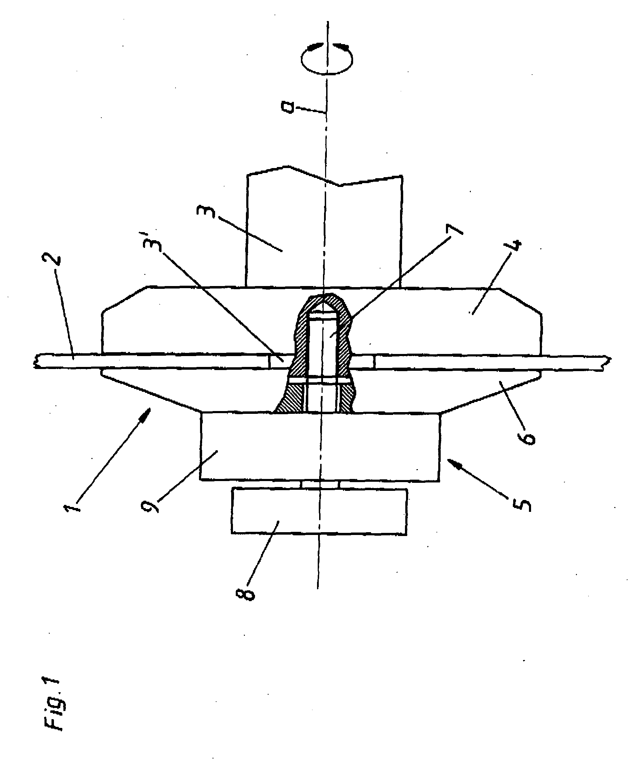

In Fig. 1 ist von der Werkstoffbearbeitungsmaschine lediglich die Welle 3, die um die Drehachse a drehbar gelagert ist, dargestellt. Die Welle 3 weist abtriebsseitig einen Wellenzapfen 3' auf, an dem - von rechts nach links betrachtet - das Anlageelement 4 der erfindungsgemäßen Vorrichtung 1, das Rotationswerkzeug 2 und zumindest teilweise die Spannscheibe 6 der Spanneinrichtung 5 aufgeschoben ist.

Das Rotationswerkzeug 2 ist mittels der Spanneinrichtung 5 zwischen der Anlagefläche 18 der Spannscheibe 6 und der Anlagefläche 18' des Anlageelementes 4 festgeklemmt, wobei das Aufspannen des Rotationswerkzeuges 2 bzw. das Einklemmen desselben zwischen dem Anlageelement 4 und der Spannscheibe 6 mittels des in die Welle 3 axial einschraubbaren Spannelementes 7 erfolgt. Dazu ist am freien Ende des Spannelementes 7 ein Kraftübertragungselement 8 angeordnet, wobei die Spanneinrichtung 5 erfindungsgemäß einen zwischen dem Kraftübertragungselement 8 und dem Spannelement 7 wirkenden Kraftuntersetzungsmechanismus 9 aufweist.

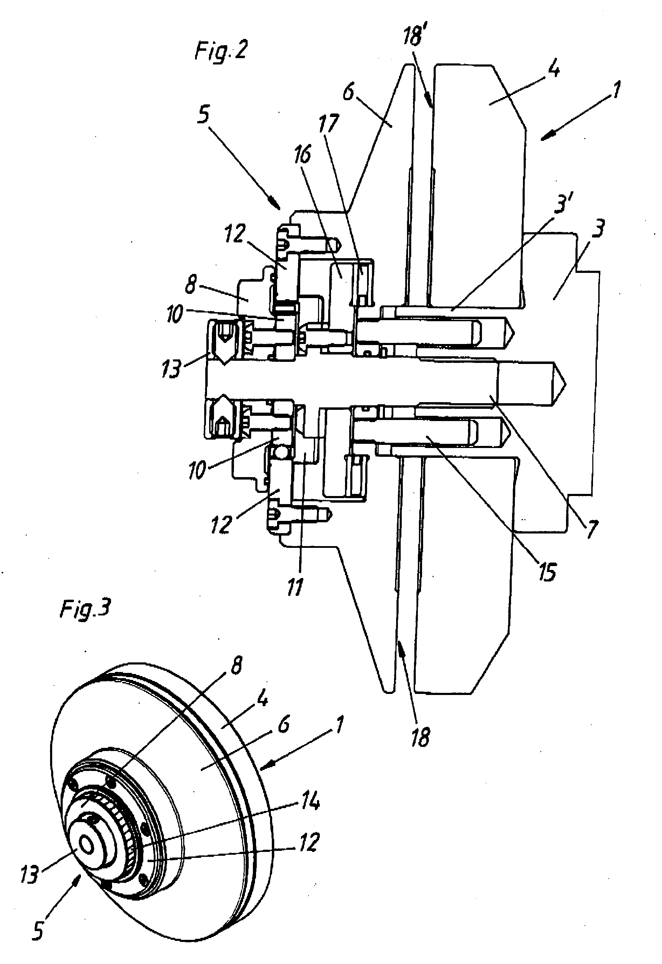

In den Fig. 2 und 3 ist ein erstes Ausführungsbeispiel der Erfindung dargestellt, bei dem der Kraftuntersetzungsmechanismus 9 ein Untersetzungsgetriebe aufweist. Das Untersetzungsgetriebe wird von einem Harmonic-Drive-Getriebe gebildet und weist beim dargestellten Ausführungsbeispiel drei Bauteile - ein ellipsenförmiges Antriebselement 10 (Wave Generator), einen eine Außenverzahnung aufweisenden Zahnkranz 11 (Flex Spline) und ein eine Innenverzahnung aufweisendes Abtriebselement 12 (Circular Spline) - auf, ist mit der Spannscheibe 6 gekoppelt und kann mit diesem als gesamte Einheit gesehen werden.

Die Funktionsweise dieses ersten Ausführungsbeispieles der erfindungsgemäßen Vorrichtung 1 wird nachfolgend erläutert. Das Rotationswerkzeug 2 (Fig. 1), beispielsweise ein Kreissägeblatt, wird zwischen dem Anlageelement 4 und der Spanneinrichtung 5 eingeklemmt, und zwar zwischen den Anlageflächen 18 und 18', wobei die Drehmomentübertragung unter Reibschluss erfolgt. In einem ersten Schritt wird das Rotationswerkzeug 2 auf die Welle 3 der Werkstoffbearbeitungsmaschine, beispielsweise einer Formatkreissäge, geschoben bis es am Anlageelement 4 flächig anliegt. Um die Spanneinrichtung 5 grob zu positionieren, wird das Spannelement 7 in die Welle 3 geschraubt, bis die Spannscheibe 6 am Rotationswerkzeug 2 anliegt. Dabei wird das Antriebselement 10 über die im Anlageelement 4 eingeschraubten Sicherungsstifte 15 verdrehgesichert. Über das Betätigungselement 13 wird der Zahnkranz 11 angetrieben, wodurch sich das Spannelement 7 in die Welle 3 einschraubt.

Um die zur sicheren Befestigung des Rotationswerkzeuges benötigte Klemmkraft zu erzielen, wird in weiterer Folge das Untersetzungsgetriebe über das Kraftübertragungselement 8, welches direkt auf das Antriebselement 10 wirkt bzw. Teil desselben sein kann, angetrieben. Dadurch schraubt sich das Spannelement 7 mittels des Untersetzungsgetriebes weiter in die Wellen 3 ein. Der Kraftfluss erfolgt dabei vom Spannelement 7 über den Druckflansch 16 auf den Nadelkranz 17 und von dort weiter auf die Spannscheibe 6.

Der Nadelkranz 17 stellt bei diesem Ausführungsbeispiel gleichzeitig das Drehlager dar und stellt den benötigten Freilauf zwischen dem Untersetzungsgetriebe und der Spannscheibe 6 sicher.

Aus Fig. 3 ist weiters ersichtlich, dass die Umfangsfläche 14 des als Drehring ausgebildeten Kraftübertragungselementes 8 nicht glatt ausgebildet ist, wobei hinsichtlich der Oberflächengestaltung keine Einschränkung erfolgen soll. Wesentlich dabei ist lediglich der Umstand, dass die Ausbildung der Oberfläche derart erfolgt, dass einem Benutzer, der das Kraftübertragungselement 8 mit der Hand dreht, eine rutschfeste Grifffläche geboten wird.

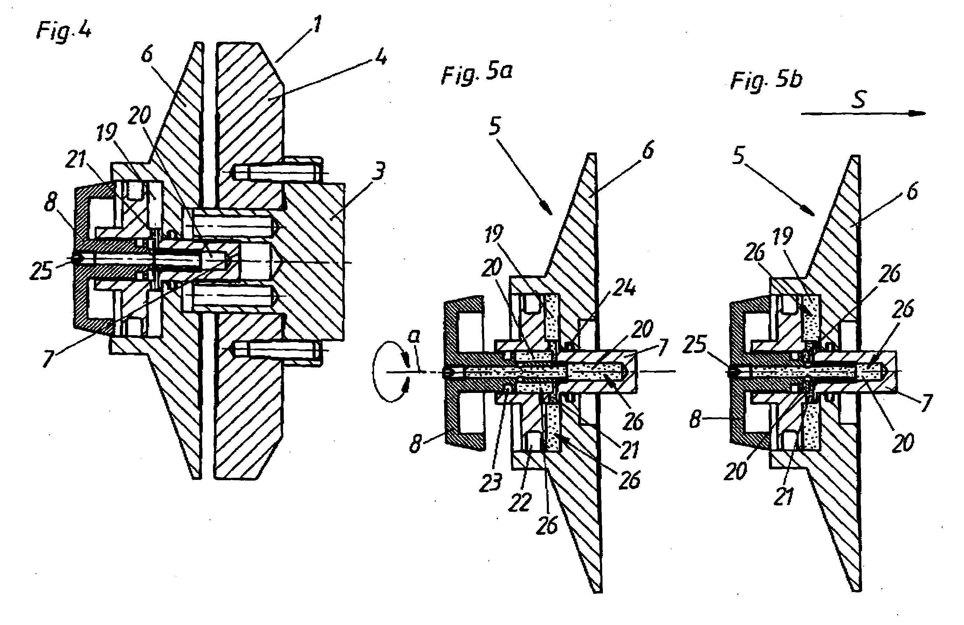

Das in den Fig. 4, 5a und 5b gezeigte zweite Ausführungsbeispiel der Erfindung unterscheidet sich vom Ausführungsbeispiel gemäß Fig. 2 und 3 in der Art des Kraftuntersetzungsmechanismus. Dieser weist beim zweiten Ausführungsbeispiel gemäß Fig. 4 - 5b ein hydraulisches Getriebe auf.

Gleiche Teile wurden mit den gleichen Bezugszeichen versehen, weshalb auf eine nochmalige ausführliche Beschreibung derselben verzichtet wird.

Erfolgt beim ersten Ausführungsbeispiel (Fig. 2 und 3) das Aufspannen des Rotationswerkzeuges 2 bzw. das Einklemmen desselben zwischen dem Anlageelement 4 und der Spannscheibe 6 mittels des in die Welle 3 axial einschraubbaren Spannelementes 7, wird bei dem in Fig. 4 dargestellten Ausführungsbeispiel das Spannelement 7 lediglich zum Vorspannen benutzt. Dazu wird in einem ersten Schritt das Rotationswerkzeug 2 auf die Welle 3 der Werkstoffbearbeitungsmaschine, beispielsweise einer Formatkreissäge, geschoben, bis es am Anlageelement 4 flächig anliegt. Um die Spanneinrichtung 5 grob zu positionieren, wird danach das Spannelement 7 in die Welle 3 eingeschraubt, bis die Spannscheibe 6 am Rotationswerkzeug anliegt.

Um die zur sicheren Befestigung des Rotationswerkzeuges 2 benötigte Klemmkraft zu erzielen, wird in weiterer Folge das hydraulische Getriebe über das Kraftübertragungselement 8 betätigt.

Die Funktionsweise dieses zweiten Ausführungsbeispieles der Erfindung wird nachfolgend unter Bezugnahme auf die Fig. 5a und 5b näher erläutert.

Bei dieser Ausführungsvariante der Erfindung weist der Kraftuntersetzungsmechanismus 9 ein hydraulisches Getriebe auf, d.h. als Arbeitsmedium zur Übertragung der Kräfte und Bewegungen wird eine Flüssigkeit 26, beim dargestellten Ausführungsbeispiel Mineralöl, verwendet. Das Funktionsprinzip des Kraftuntersetzungsmechanismus 9 folgt bei diesem Ausführungsbeispiel dem Funktionsprinzip einer hydraulischen Presse, d.h. das Mineralöl dient zur Übertragung der mittels des Kraftübertragungselementes 8, welches als Pumpenkolben dient, aufgewendeten Kraft auf die Spannscheibe 6, die den Presskolben darstellt.

Dazu ist die Kammer 20 mit kleiner Querschnittsfläche über die Leitung 21 mit der Kammer 19 mit großer Querschnittsfläche verbunden. Wird nun über das Betätigungselement 8 in der Kammer 20 Kraft ausgeübt, gibt die Flüssigkeit 27 den Druck an die Spannscheibe 6 weiter, sodass diese in Spannrichtung S bewegt wird, wodurch das Rotationswerkzeug 2 zwischen den Anlageflächen 18, 18' festgeklemmt wird.

In Fig. 5a ist die Spanneinrichtung 5 in entspanntem Zustand dargestellt, Das Kraftüberträgungselement 8 ist in eine die Kammer 20 bildende Bohrung des Spannelementes 7 eingeschraubt. Über die Leitung 21 steht die Kammer 20 des Spannelementes 7 mit der zwischen dem Spannelement 7 und der Spannscheibe 6 gebildeten Kammer 19 in Verbindung. Die von Mineralöl gebildete Flüssigkeit 26 des hydraulischen Getriebes wird beim gezeigten Ausführungsbeispiel durch eine Bohrung im Kraftübertragungselement 8 eingebracht, die endseitig mittels einer Madenschraube 25 verschließbar ist. Um ein Austreten der Flüssigkeit 26 zu verhindern, ist eine erste Dichtung 23 zwischen dem Spannelement 7 und dem Kraftübertragungselement 8, eine zweite Dichtung 24 zwischen dem Spannelement 7 und der Spannscheibe 6 vor der Kammer 19 und eine dritte Dichtung 22 zwischen dem Spannelement 7 und der Spannscheibe 6 hinter der Kammer 19 angeordnet.

Wird nun das Kraftübertragungselement 8 um die Drehachse a gedreht, schraubt sich das Kraftübertragungselement 8 in die die Kammer 20 bildende Bohrung des Spannelementes 7 ein. Der in Folge der Kraftausübung in der Kammer 20 resultierende erhöhte Druck wird von der Flüssigkeit 26 über die Leitung 21 in die Kammer 19 weitergegeben und bewegt, dem Funktionsprinzip einer hydraulischen Presse folgende, die Spannscheibe 6 in Spannrichtung S (Fig. 5b).

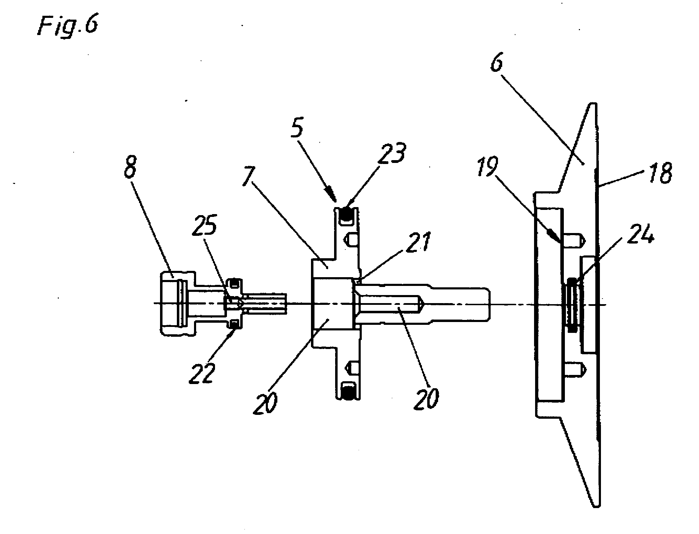

In Fig. 6 ist ein weiteres Ausführungsbeispiel einer erfindungsgemäßen Spanneinrichtung 5 mit einer hydraulischen Presse in einer Explosionsdarstellung gezeigt. Die Spannscheibe 6 weist eine Durchtrittsbohrung zur Aufnahme des Spannelementes 7 auf, wobei die Abdichtung zwischen dem in dieser Durchthttsöffnung angeordneten Fortsatz des Spannelementes 7 und der Spannscheibe 6 mittels einer Dichtung 24 erfolgt. Auf der der Anlagefläche 18 abgewandten Seite ist am Spannelement 6 die Kammer 19 der hydraulischen Presse ausgebildet, die in zusammengebautem Zustand von der am Spannelement 7 ausgebildeten Fläche 27 begrenzt wird. Die Abdichtung zwischen der flanschartigen Erweiterung des Spannelementes 7 und der Spannscheibe 6 erfolgt mittels einer Ringdichtung 23.

Die Kammer 20 der hydraulischen Presse mit kleinerem Querschnitt wird von einer Bohrung im Spannelement 7 gebildet, wobei die Kammer 20 im zusammengebauten Zustand der Spanneinrichtung 5 mit der Kammer 19 über eine im Spannelement 7 in axialer Richtung ausgebildeten Bohrung 21 in Verbindung steht.

Wie schon beim Ausführungsbeispiel gemäß Fig. 4 dient das Kraftübertragungselement 8 als Druckkolben der hydraulischen Presse, während das Spannelement 6 den Presskolben darstellt. Beim Aufspannen des Rotationswerkzeuges 2 wird das Betätigungselement 8 in die Kammer 20 am Spannelement 7 eingeschraubt, sodass der sich erhöhende Druck von der Flüssigkeit 26 (nicht dargestellt) über die die Leitung 21 bildende Durchgangsbohrung in die Kammer 19 ausbreitet und die Spannscheibe 6 in Spannrichtung S bewegt, wodurch das zwischen der Anlagefläche 18 der Spannscheibe 6 und der Anlagefläche 18' des Anlageelementes 4 eingespannte Rotationswerkzeug 2 (nicht dargestellt) festgeklemmt wird. Um ein Austreten der in der Kammer 20 befindlichen Flüssigkeit 26 in Richtung des Kraftübertragungselementes 8 zu verhindern, ist zwischen dem Ktaftübertragungselement 8 und der Kammer 20 ebenfalls ringförmige Dichtung 22 angeordnet.

Die dargestellten Ausführungsbeispiele von Vorrichtungen zum Befestigen eines Rotationswerkzeuges an einer Welle einer Werkstoffbearbeitungsmaschine sind selbstverständlich nicht in einschränkendem Sinne zu verstehen, sondern eben nur einzelne Beispiele von zahlreichen Möglichkeiten, den Erfindungsgedanken einer Spanneinrichtung für Rotationswerkzeuge mit einem Kraftuntersetzungsmechanismus zu realisieren.

## Patentansprüche

1. Vorrichtung zum Befestigen eines Rotationswerkzeuges, insbesondere Kreissägeblatt, Fräser oder dergleichen, an einer Welle einer Werkstoffbearbeitungsmaschine, insbesondere Holzbearbeitungsmaschine, mit einem Anlageelement und einer Spanneinrichtung, die jeweils eine Anlagefläche, zwischen denen das Rotationswerkzeug klemmbar ist, aufweisen, wobei die Spanneinrichtung eine die Anlagefläche aufweisende Spannscheibe, ein die Spannscheibe durchsetzendes, mit der Welle verbindbares, insbesondere axial verschraubbares Spannelement, wenigstens ein Krafttibertragungselement zum Verbinden des Spannelementes mit der Welle und einen zwischen dem Kraftübertragungselement und dem Spannelement wirkenden Kraftuntersetzungsmechanismus aufweist, **dadurch gekennzeichnet, dass** der zwischen dem Kmftübertragungselement (8) und dem Spannelement (7) wirkende Kraftuntersetzungsmechanismus (9) ein hydraulisches Getriebe aufweist.

2. Vorrichtung nach Anspruch 1, **dadurch gekennzeichnet, dass** das hydraulische Getriebe zur Gänze in die Spanneinrichtung (5) integriert ist, sodass die Spanneinrichtung (5) als separate, maschinenunabhängige Einheit verwendbar ist.

3. Vorrichtung nach Anspruch 1 oder 2, **dadurch gekennzeichnet, dass** das hydraulische Getriebe mehrere, vorzugsweise zwei über wenigstens eine Leitung (21) in Verbindung stehende Kammern (19, 20) mit verschieden großen Querschnittsflächen aufweist, wobei die Kammern (19, 20) jeweils von einem axial bewegbaren Kolben begrenzt sind.

4. Vorrichtung nach einem der Ansprüche 1 bis 3, **dadurch gekennzeichnet, dass** der Kolben der Kammer (20) mit der kleineren Querschnittsfläche vom Kraftübertragungselement (8) und der Kolben der Kammer (19) mit der größeren Querschnittsfläche von der Spannscheibe (6) gebildet ist.

5. Vorrichtung nach einem der Ansprüche 1 bis 4, **dadurch gekennzeichnet, dass** die Spanneinrichtung (5) eine hydraulische Presse umfasst.

6. Vorrichtung nach einem der Ansprüche 1 bis 5, **dadurch gekennzeichnet, dass** das Kraftübertragungselement (8) Teil des Kraftuntersetzungsmechanismus (9) ist.

7. Vorrichtung nach einem der Ansprüche 1 bis 6, **dadurch gekennzeichnet, dass** das Kraftübertragungselement (8) zur werkzeuglosen manuellen Betätigung durch einen Benutzer ausgebildet und angeordnet ist.

8. Vorrichtung nach Anspruch 7, **dadurch gekennzeichnet, dass** das Kraftübertragungselement (8) von einer Drehscheibe oder einem Drehring gebildet ist.

9. Vorrichtung nach einem der Ansprüche 1 bis 8, **dadurch gekennzeichnet, dass** der Kraftuntersetzungsmechanismus (9) ein Untersetzungsverhältnis größer 1:10, vorzugsweise größer 1:25 aufweist.

10. Vorrichtung nach Anspruch 9, **dadurch gekennzeichnet, dass** das Untersetzungsverhältnis über 1:35, vorzugsweise bei etwa 1:50, liegt.
